# EUROPEAN PATENT SPECIFICATION

(11) **EP 1 455 435 B1**
(45) Date of publication and mention of the grant of the patent: **28.09.2011**
(21) Application number: 03029500.0
(22) Date of filing: 20.12.2003
(51) Int. Cl.: H02K 17/04

(54) **Single phase induction motor further comprising a permanent magnetic unit**
Einphasiger Asynchronmotor mit einer dauermagnetischen Einheit
Moteur asynchrone monophasé comprenant une unité aux aimants permanents

(30) Priority: 04.03.2003 KR 2003013490; 12.03.2003 KR 2003015520; 14.03.2003 KR 2003016177
(43) Date of publication of application: 08.09.2004
(73) Proprietor: LG Electronics, Inc., Seoul (KR)
(72) Inventor: Han, Seung-Do, Namdong-Gu Incheon (KR); Shin, Hyoun-Jeong, Namdong-Gu Incheon (KR); Ahn, Jun-Ho, Sinjeong 7-dong Yangcheon-Gu Seoul (KR)
(74) Representative: Cohausz & Florack

(56) References cited:
- EP-A- 0 246 410
- EP-A2- 0 942 511
- DE-A- 3 609 351
- DE-A- 19 548 117
- DE-A- 19 821 632

## Description

### BACKGROUND OF THE INVENTION

### 2. Description of the Related Art

However, in the conventional induction motor, both a current for generating the rotating magnetic field and an induced current generated from the rotor are supplied through a coil connected to an external power source. At this time, by a primary copper loss generated from the stator coil and a secondary copper loss generated from the conductor bars of the rotor, loss of current is increased and thereby efficiency of the motor is decreased.
German Patent application 195 48 117 A1 discloses a single phase induction motor comprising: a stator installed at an inner circumferential surface of a motor body, the stator on which a plurality of coils are wound; a rotor rotatably installed at a center portion of the stator and provided with a rotation shaft at a center thereof; and a magnet unit freely and rotatably installed between the stator and the rotor with an air gap, wherein the magnet unit comprises: a back yoke located between the stator and the rotor and a plurality of magnets attached to an outer circumferential surface of the back yoke. However, it does not disclose how to construct the back yoke in order to obtain a single phase induction motor with high efficiency.
European patent application EP 0 246 410 A2 discloses an induction motor having a stator with a stator winding, a rotor coupled with a shaft and separated from the stator by an air gap, wherein the rotor includes a current conducting element and a magnetically excitable member, and in the air gap formed between the stator and the magnetically excitable member, a rotary element is arranged, made from a permanent magnetic material and supported freely running with respect to the rotor.
European patent application EP 0 942 511 A2 discloses permanent magnet rotors and methods for assembling the same. In one embodiment, one or more arcuate magnetic elements are disposed around a cylindrical rotor core. In turn, a hollow retaining shell is slip-fit around the magnetic element or elements. Spring biasing members prevent relative movement between the core, the magnetic elements and the retaining shell. Annular end plates are secured to the ends of the core to seal off the interior of the device. In another embodiment, relative movement between the core, the magnetic elements and the retaining shell is prevented by applying adhesive between those parts.

### SUMMARY OF THE INVENTION

Therefore, an object of the present invention is to provide a single phase induction motor which can increase an efficiency by employing a certain back yoke construction.

To achieve these and other advantages and in accordance with the purpose of the present invention, as embodied and broadly described herein, there is provided an induction motor comprising: a stator installed at an inner circumferential surface of a motor body, comprising a plurality of coils, a rotor rotatably installed inside the stator and provided with a rotation shaft at a center thereof, and comprising conduct bars and short-cut end rings, and a magnet unit installed radially between the stator and the rotor with an air gap, and configured to be rotatable freely, wherein the magnet unit comprises a back yoke located between the stator and the rotor, the back yoke being a magnetic substance, wherein a radial thickness of the back yoke is between 0.2mm and 0.6 mm,a plurality of magnets attached to on the outer surface of the back yoke, a supporter coupled to one end of the back yoke so as to support the back yoke, and a bearing press-fit into a center of the supporter so as to be rotatably coupled to an outer circumferential surface of the rotation shaft.

### BRIEF DESCRIPTION OF THE DRAWINGS

In the drawings:

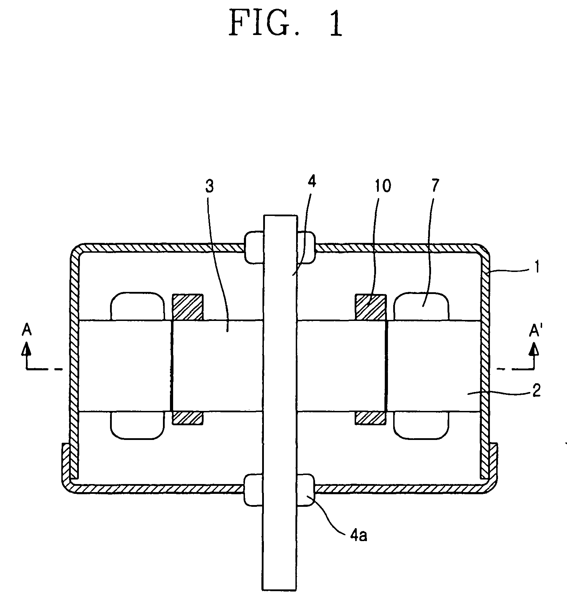

Figure 1 is a longitudinal section view showing an inner part of a single phase induction motor in accordance with the conventional art;

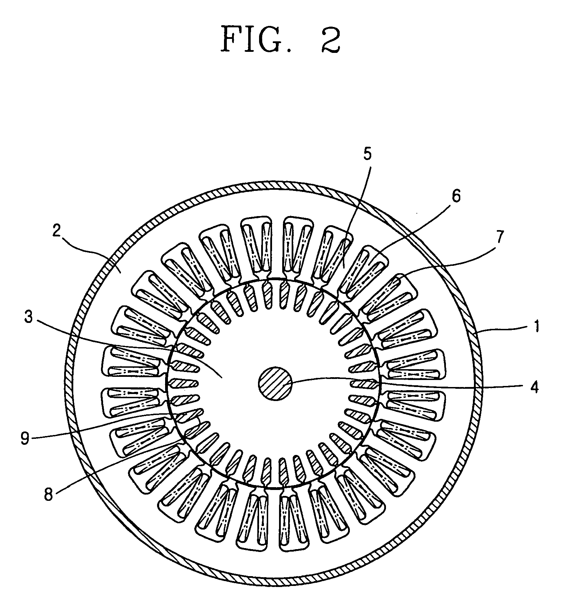

Figure 2 is a sectional view taken along line A-A' of Figure 1;
Figure 6 is a longitudinal section view showing another embodiment of the magnet unit of the single phase induction motor according to the present invention;
Figure 7 is a sectional view taken along line B-B' of Figure 6;
Figure 8 is a partially-cut perspective view showing the magnet unit of Figure 6;

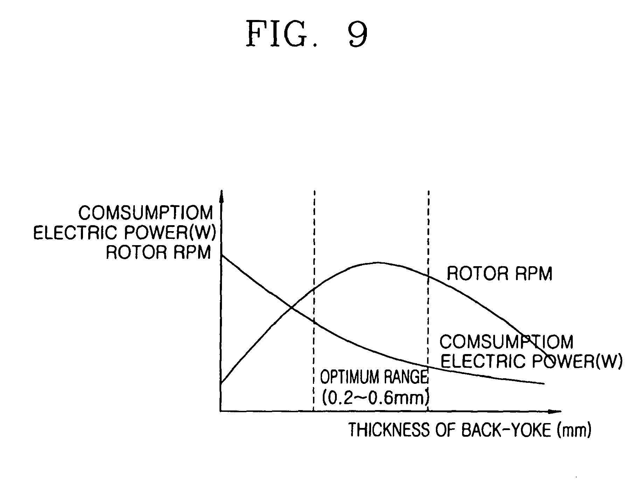

Figure 9 is a graph showing a relation between a consumption electric power and a rotor rpm according to a thickness of a back yoke of the magnet unit of Figure 6;

### DETAILED DESCRIPTION OF THE PREFERRED EMBODIMENTS

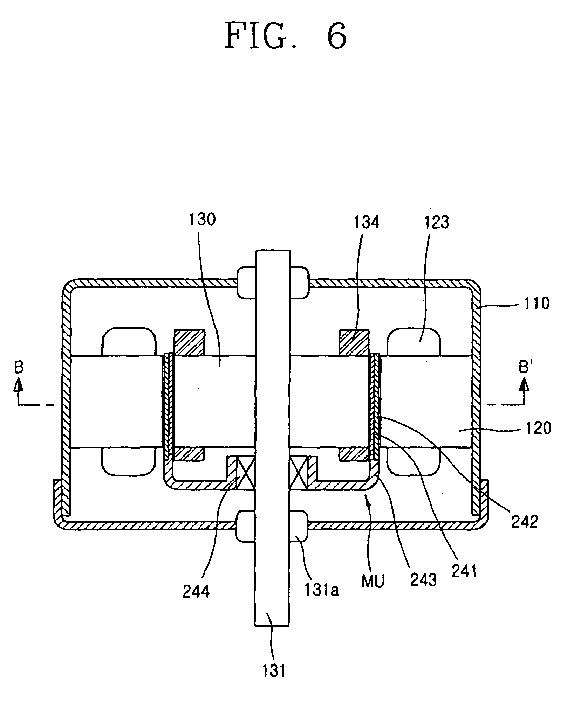

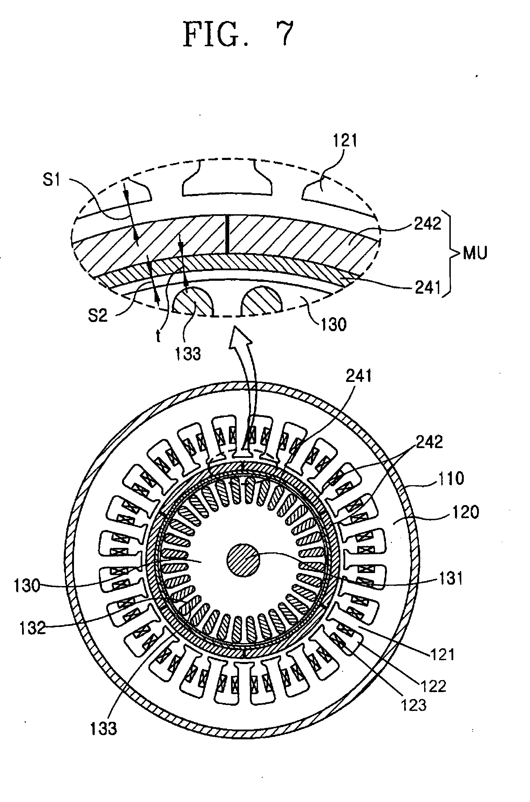

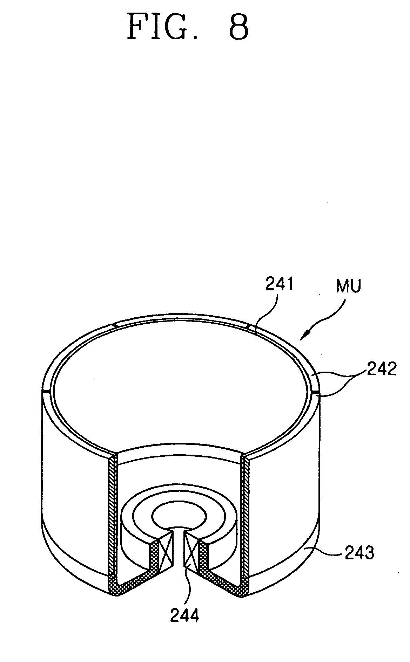

Figure 6 is a longitudinal section view showing an inner part of a single phase induction motor in accordance with the present invention, Figure 7 is a sectional view taken along line B-B' of Figure 6, and Figure 8 is a partially-cut perspective view showing a magnet unit of a single phase induction motor according to the present invention.

Referring to Figures 6 to 8, the single phase induction motor according to the present invention comprises: a motor body 110 serving as a casing; a stator 120 arranged at an inner circumferential surface of the body 110; a rotor 130 rotatably arranged at a center portion of the stator 120; and a rotation shaft 131 around which the rotor 130 is rotated. Herein, the rotor 130 is constructed to always maintain a constant interval with the stator 120.

A magnet unit (MU) is freely and rotatably installed between the stator 120 and the rotor 130 by a rotating magnetic field.

Hereinafter, an embodiment of the magnet unit will be explained with reference to Figures 6 to 8.

Referring to Figures 6 to 8, the magnet unit MU will be explained. First, a back yoke 241, wherein a thickness of the back yoke is set as 0.2-0.6 mm, is located between the stator 120 and the rotor 130, and a plurality of magnets 242 are attached to an outer circumferential surface of the back yoke 241.

A supporter 243 of a cup shape is coupled to the back yoke 241 so as to support the back yoke 241.

A bearing 244 is press-fit into a center of the supporter 243 so as to be rotatably coupled to the outer circumferential surface of the rotation shaft 131. The back yoke 241 is a magnetic substance.

Hereinafter, operations of the single phase induction motor according to the present invention will be explained with reference to Figures 6 to 8.

Herein, the supporter 243 is constructed to freely rotate around the rotation shaft 131 by the bearing of the supporter 243. Also, since the plurality of magnets 242 attached to an outer circumferential surface of the back yoke 241 and the supporter 243 is coupled to the back yoke 241, the entire magnet unit MU is rotated.

The magnet unit freely rotated is installed between the stator and the rotor, the magnet unit of a low inertia state is freely rotated by the rotating magnetic field generated from the stator, and the magnet unit again generates the rotating magnetic field of a strong magnetic flux thus to rotate the rotor, thereby enhancing an efficiency of the motor and enabling a low noise driving.

## Claims

1. A single phase induction motor comprising:
a stator (120) installed at an inner circumferential surface of a motor body (110), comprising a plurality of coils (123);
a rotor (130) rotatably installed inside the stator (120) and provided with a rotation shaft (131) at a center thereof, and comprising conductor bars and short-circuit end rings; and
a magnet unit (MU) installed radially between the stator (120) and the rotor (130) with an air gap, and configured to be rotatable freely, wherein the magnet unit (MU) comprises a back yoke (241) located between the stator (120) and the rotor (130), the back yoke (241) being a magnetic substance, wherein a radial thickness of the back yoke (241) is between 0.2mm and 0.6 mm;
a plurality of magnets (242) attached to on the outer surface of the back yoke (241);
a supporter (243) coupled to one end of the back yoke (241) so as to support the back yoke (241); and
a bearing (244) press-fit into a center of the supporter (243) so as to be rotatably coupled to an outer circumferential surface of the rotation shaft (131).

## Patentansprüche

1. Einphasen-Induktionsmotor, welcher umfasst:
einen Stator (120), der an einer Innenumfangsfläche eines Motorkörpers (110) angebracht ist und eine Mehrzahl von Spulen (123) umfasst;
einen Rotor (130), der drehbar innerhalb des Stators (120) angebracht ist und in seiner Mitte mit einer Drehwelle (131) versehen ist und Leiterstäbe und Kurzschluss-Endringe umfasst; und
eine Magneteinheit (MU), die radial zwischen dem Stator (120) und dem Rotor (130) mit einem Luftspalt angebracht ist und so gestaltet ist, dass sie frei drehbar ist, wobei die Magneteinheit (MU) umfasst:
ein Rückjoch (241), das zwischen dem Stator (120) und dem Rotor (130) angeordnet ist, wobei das Rückjoch (241) aus einem magnetischen Stoff besteht, wobei eine radiale Dicke des Rückjoches (241) zwischen 0,2 mm und 0,6 mm beträgt;
mehrere Magnete (242), die an der Außenfläche des Rückjoches (241) befestigt sind;
ein Träger (243), der mit einem Ende des Rückjoches (241) gekoppelt ist, um so das Rückjoch (241) zu stützen; und
ein Lager (244), das durch Presspassung in eine Mitte des Trägers (243) eingepasst ist, so dass es drehbar mit einer Außenumfangsfläche der Drehwelle (131) gekoppelt ist.

## Revendications

1. Moteur à induction monophasé comprenant:
un stator (120) installé au niveau d'une surface circonférentielle intérieure d'un corps de moteur (110), comprenant une pluralité de bobines (123);
un rotor (130) installé rotativement à l'intérieur du stator (120) et pourvu d'un arbre de rotation (131) au niveau d'un centre de celui-ci, et comprenant des barres conductrices et des bagues d'extrémité de court-circuit; et
une unité d'aimant (MU) installée radialement entre le stator (120) et le rotor (130) avec un entrefer, et configurée afin d'être rotative librement, dans lequel l'unité d'aimant (MU) comprend:
une culasse dorsale (241) située entre le stator (120) et le rotor (130), la culasse dorsale (241) étant une substance magnétique, dans lequel une épaisseur radiale de la coulasse dorsale (241) est comprise entre 0.2 mm et 0.6 mm;
une pluralité d'aimants (242) fixés sur la surface extérieure de la culasse dorsale (241);
un élément de support (243) couplé à une extrémité de la culasse dorsale (244) à de manière à supporter la culasse dorsale (241); et
un palier (244) emmanché à force dans un centre de l'élément de support (243) de manière à être couplé rotativement à une surface circonférentielle extérieure de l'arbre de rotation (131).
